# EUROPEAN PATENT APPLICATION

(11) **EP 2 848 335 A1**
(43) Date of publication of application: **18.03.2015**
(21) Application number: 13184720.4
(22) Date of filing: 17.09.2013
(51) Int. Cl.: B22F 3/105, B22F 5/04, B23P 6/00, F01D 5/00

(54) **Method and apparatus for repairing a component**

(71) Applicant: SLM Solutions GmbH, 23556 Lübeck (DE)
(72) Inventor: Schöneborn, Henner, 23556 Lübeck (DE); Schwarze, Dieter, Dr., 23556 Lübeck (DE)
(74) Representative: Schicker, Silvia

(57) **Abstract**

In a method for repairing a component (40), in particular a turbine blade, the component (40) is positioned on a carrier (16) such that a repair site (42) of the component (40) faces away from the carrier (16). The component (40) is heated by means of a heating element (46) extending from the carrier (16) adjacent to the component (40). A raw material powder is applied onto the carrier (16) such that the component (40) is covered by the raw material powder. Electromagnetic or particle radiation is selectively irradiated onto the raw material powder applied onto the carrier (16) by means of an irradiation device (18) so as to produce a repair segment on the repair site (42) of the component (40) by an additive layer construction method.

## Description

The present invention relates to a method and an apparatus for repairing a component by a selective laser melting or laser sintering process involving the irradiation of layers of a raw material powder with electromagnetic or particle radiation.

Turbomachine components such as turbine blades usually are operated under severe mechanical and thermal loads and hence are subject to wear. In particular a tip region, i.e. a radially outermost region of a turbine blade, during operation of the turbomachine, suffers from thermal stresses which may induce cracks and hence weaken the mechanical strength of the turbine blade to an undue extent. Moreover, turbine blades, in particular in their tip region, are prone to damages caused by external impact such as, for example, bird strike. A conventional method of repairing a turbine blade as described, for example, in EP 1 914 382 A2 involves the removal of a damaged segment of the turbine blade and the replacement of the damaged segment by a replacement part. Usually, the replacement part is welded to a base segment of the turbine blade from which the damaged segment has been removed.

Selective laser melting or laser sintering is an additive layering process by which pulverulent, in particular metallic and/or ceramic raw materials can be processed to three-dimensional work pieces of complex shapes. To that end, a raw material powder layer is applied onto a carrier and subjected to laser radiation in a site selective manner in dependence on the desired geometry of the work piece that is to be produced. The laser radiation penetrating into the powder layer causes heating and consequently melting or sintering of the raw material powder particles. Further raw material powder layers are then applied successively to the layer on the carrier that has already been subjected to laser treatment, until the work piece has the desired shape and size. An apparatus for producing moulded bodies from pulverulent raw materials by selective laser melting is described, for example, in EP 1 793 979 A1.

Selective laser melting or laser sintering may be used in particular for the production of prototypes, tools, replacement parts or medical prostheses on the basis of CAD data. Further, selective laser melting or laser sintering may be employed for repairing high value components such as, for example, turbomachine components.

The invention is directed at the object of providing a method and an apparatus which allow a high quality repair of a component by a selective laser melting or laser sintering process.

This object is addressed by a method as defined in claim 1 and an apparatus as defined in claim 9.

In a method for repairing a component, the component is positioned on a carrier. The component may be any component, such as, for example, a machine component or the like, but preferably is a high value component suitable for operation under high mechanical and thermal loads. In particular, the component is a turbine blade. The carrier may be disposed in a process chamber and may be a rigidly fixed carrier. Preferably, however, the carrier is designed to be displaceable in vertical direction. The process chamber accommodating the carrier may be sealable against the ambient atmosphere, i.e. against the environment surrounding the process chamber, in order to be able to maintain a controlled atmosphere, in particular an inert atmosphere within the process chamber. The component is positioned on the carrier such that a repair site of the component faces away from the carrier. In case the component to be repaired is designed in the form of a turbine blade, the component may, for example, be positioned on the carrier such that a tip region of the turbine blade, which in particular is subject to wear and damages caused by external impact, faces away from the carrier, whereas a base segment of the turbine blade, which during operation of the turbine blade in a turbomachine is attached to a rotor of the turbomachine, faces the carrier.

The component is heated by means of a heating element extending from the carrier adjacent to the component. In particular, the heating element and the component to be repaired may be positioned on the carrier in a side-by-side arrangement. In any case, the heating element and the component to be repaired should be positioned on the carrier such that heat generated by the heating element is transferred to the component to be repaired resulting in a heating of the component to be repaired to a desired temperature.

A raw material powder is applied onto the carrier such that the component is covered by the raw material powder. The raw material powder may be applied onto the carrier by means of a powder application device such that a layer of raw material powder covers the repair site of the component to be repaired. Preferably, the component is entirely covered by the raw material powder. In dependence on the size and dimensions of the heating element, the heating element may also be entirely covered by the raw material powder. It is, however, also conceivable that the heating element is only partially covered by the raw material powder, i.e. extends from the raw material powder applied onto the carrier. Further, a gap between the heating element and the component to be repaired may be filled with raw material powder.

The raw material powder may be adapted to the material of the component to be repaired. Preferably, the raw material powder consists of the same material as the component to be repaired. In case the component to be repaired is designed in the form of a turbine blade, the raw material powder preferably is a metallic powder, in particular a metal alloy powder, and preferably a Ti, Ni or Fe based (super)alloy or a tungsten molybdenum alloy powder. It is, however, also conceivable to use a ceramic powder or a powder containing different materials as the raw material powder. The raw material powder may have any suitable particle size or particle size distribution. It is, however, preferable to process powders of particle sizes < 100 µm.

Finally, electromagnetic or particle radiation is selectively irradiated onto the raw material powder applied onto the carrier by means of an irradiation device so as to produce a repair segment on the repair site of the component by an additive layer construction method. The term "repair site" in the context of the present application thus should designate a portion of the component to be repaired which should be joined with the repair segment generated by an additive layer construction method. The raw material powder applied onto the carrier may be subjected to electromagnetic or particle radiation in a site-selective manner in dependence on the desired geometry of the repair segment that is to be produced on the repair site of the component. The irradiation device preferably is adapted to irradiate radiation onto the raw material powder which causes a site-selective melting of the raw material powder particles. The irradiation device may comprise at least one radiation source, in particular a laser source, and at least one optical unit for guiding and/or processing a radiation beam emitted by the radiation source. The optical unit may comprise optical elements such an object lens, in particular an f-theta lens, and a scanner unit, the scanner unit preferably comprising a diffractive optical element and a deflection mirror.

By selectively irradiating a layer of raw material powder applied onto the repair site of the component with electromagnetic or particle radiation, a first layer of the repair segment is generated on the repair site of the component. The additive layer construction method employed for generating the repair segment may further include the steps of repeatedly vertically displacing the carrier so as to compensate for the height of the already generated layer(s) of the repair segment, applying a further layer of raw material powder onto the carrier such that the component including the already generated layer(s) of the repair segment is covered by the raw material powder and selectively irradiating the layer of raw material powder applied onto the component including the already generated layer(s) of the repair segment so as to generate a further layer of the repair segment.

In the method for repairing a component, the component to be repaired is heated by means of the heating element thus reducing thermal stresses occurring within the component upon generating the repair segment on the repair site of the component by an additive layer construction method. A heating element being positioned on the carrier in a side-by-side arrangement with the component to be repaired provides for a particularly uniform heating of the component and hence a particularly effective reduction of thermal stresses within the component. The raw material powder covering the component to be repaired and filling a gap between the heating element and the component allows the heat generated by the heating element to be efficiently transferred to the component, in particular in case a metallic powder having a high thermal conductivity is used as the raw material powder. The method for repairing a component thus provides for a crack-free and thus high quality repair of high value components such as, for example, turbomachine components, in particular turbine blades by using a selective laser melting or laser sintering process.

Preferably, operation of the irradiation device is controlled by means of a control device such that a repair segment is produced on the repair site of the component by an additive layer construction method, the shape and dimensions of which are configured such that the original shape and dimensions of the component prior to being damaged are reconstructed. For example, the control device may be supplied with CAD data indicating the original shape and dimensions of the component prior to being damaged. The shape and dimensions of a repair segment generated by an additive layer construction method can be controlled with a high accuracy allowing the original shape and dimensions of the component prior to being damaged to be reconstructed. If necessary, a finishing step such as, for example, a manual finishing step or a machining step, in particular a CNC milling step, might be carried out in order to exactly reconstruct the original shape and dimensions of the component prior to being damaged. Hence, the performance of a component after repair corresponds at least almost to the performance of the component prior to being damaged.

In a preferred embodiment of the method for repairing a component, a damaged segment of the component is removed so as to generate the repair site of the component. For example, the damaged segment of the component may be removed by machining the component, in particular by milling the component. Removal of the damaged segment of the component allows the repair segment to be produced on an intact repair site resulting in a high resistance of the repaired component against thermal and mechanical loads. Preferably, the control device for controlling the operation of the irradiation device upon producing the repair segment on the repair site of the component is supplied with data, in particular CAD data, representative of the shape and dimensions of the component after removal of the damaged segment. The control device then is capable of controlling the operation of the irradiation device in dependence on the shape and dimensions of the component after removal of the damaged segment such that the original shape and dimensions of the component prior to being damaged are reconstructed.

Basically, the damaged segment of the component may be removed before the component to be repaired is positioned on the carrier. A particularly efficient repair process, however, can be achieved in case the damaged segment of the component is removed after the component is positioned on the carrier. The carrier then can be used for supporting the component during both the step of removing the damaged segment and the step of replacing the damaged segment by the repair segment by an additive layer construction method. The heating element may be positioned on the carrier only after the damaged segment of the component is removed ensuring that the heating element is not damaged during the step of removing the damaged segment of the component.

In a preferred embodiment of the method for repairing a component the damaged segment of the component, however, is removed so as to generate the repair site of the component while both the component and the heating element are positioned on the carrier. The heating element then can be fixedly attached to the carrier allowing the repair process to be particularly efficient. The shape and dimensions of the heating element may be adapted to a cutting depth of material removed from the component upon removing the damaged segment such that the heating element is prevented from interfering with a cutting tool during the step of removing the damaged segment of the component.

The component to be repaired may be heated by means of a heating element comprising a heating plate extending substantially perpendicular to a carrier surface of the carrier. A heating element comprising a heating plate allows a particularly uniform distribution of heat across the surface of the heating plate. The component to be repaired then may be uniformly heated allowing thermal stresses in the component to be reduced in a particularly effective manner.

The component may be fastened to the carrier by means of a fastening device which is designed so as to engage with a base segment of the component. In case the component is designed in the form of a turbine blade, the fastening device may be designed so as to engage with a base segment of the turbine blade which, during operation of the turbine blade in a turbomachine, is attached to a rotor of the turbomachine. In particular, the fastening device may comprise a receiving groove which is designed so as to receive an engagement portion formed on the base segment of the component. In case the component is designed in the form of a turbine blade, the engagement portion may be a portion of the turbine blade which, during operation of the turbine blade in a turbomachine, interacts with a complementary engagement portion provided on a rotor of the turbomachine so as to attach the turbine blade to the rotor of the turbomachine.

The receiving groove of the fastening device may have a shape that is similar to the shape of the engagement portion formed on the rotor of the turbomachine for attaching the turbine blade. A fastening device comprising a receiving groove has the further advantage that the component to be repaired may be fastened to the carrier by simply bringing the engagement portion formed on the base segment of the component into engagement with the receiving groove of the fastening device and by displacing the component in a sliding movement relative to the carrier until the component has reached a desired position on the carrier.

In a preferred embodiment of the method for repairing a component, a plurality of components are positioned on the carrier in at least one row so as to define a row pattern. The plurality of components then may be repaired simultaneously in a particularly efficient manner. The components may be heated by means of heating elements extending along both sides of the at least one row in the row pattern, i.e. heating elements sandwiching the least one row in the row pattern. The components to be repaired then are supplied with heat from two sides and thus are heated in a particularly uniform manner. Consequently, thermal stresses occurring within the components may be reduced in a particularly effective manner. Preferably, a plurality of components are positioned on the carrier in a plurality of rows. Further, heating elements may be positioned on the carrier such that an alternating pattern of heating elements and rows of components to be repaired are formed on the carrier. Specifically, each row of components to be repaired may be sandwiched between a pair of heating elements.

A step of removing damaged segments of the plurality of components may be carried out simultaneously for the plurality of components positioned on the carrier allowing the efficiency of the repair process to be further enhanced. In order to ensure that damages present in the components to be repaired are removed from all the components as desired, a cutting depth of material removed from the plurality of components upon removing the damaged segments preferably is determined by the depth of the deepest damage occurring in the damaged segments of the plurality of components. Hence, after removal of the damaged segments, all of the plurality of components have the same shape and dimensions simplifying the generation of the repair segments on the repair sites of the components by an additive layer construction method.

An apparatus for repairing a component, in particular a turbine blade, comprises a carrier adapted to support the component such that a repair site of the component faces away from the carrier. A heating element extends from the carrier adjacent to the component and is adapted to heat the component. The apparatus further comprises a powder application device which is adapted to apply a raw material powder onto the carrier such that the component is covered by the raw material powder. An irradiation device is adapted to selectively irradiate electromagnetic or particle radiation onto the raw material powder applied onto the carrier so as to produce a repair segment on the repair site of the component by an additive layer construction method.

The apparatus for repairing a component may further comprise a control device which is adapted to control operation of the irradiation device such that a repair segment is produced on the repair site of the component by an additive layer construction method, the shape and dimensions of which are configured such that the original shape and dimensions of the component prior to being damaged are reconstructed.

The shape and dimensions of the heating element preferably are adapted to a cutting depth of material removed from the component upon removing a damaged segment of the component so as to generate the repair site of the component such that the heating element is prevented from interfering with a cutting tool during a step of removing the damaged segment of the component.

The heating element may comprise a heating plate extending substantially perpendicular to a surface of the carrier. The heating plate may be made of a metallic material. In particular the heating plate may be made of copper, a material having a particularly high thermal conductivity.

The carrier may comprise a substrate layer carrying the heating element and a base layer superimposed by the substrate layer. The heating element may comprise a heating rod extending from the base layer through the substrate layer into the heating plate of the heating element. Electric lines for supplying electric energy to the heating element may be directed through the base layer of the carrier such that these electric lines are protected from heat and raw material powder by the substrate layer superimposing the base layer.

The apparatus may further comprise a fastening device for fastening the component to the carrier. The fastening device may be designed so as to engage with a base segment of the component. In particular, the fastening device may comprise a receiving groove which is designed so as to receive an engagement portion formed on the base segment of the component. In particular, the engagement portion of the component may comprises a pair of first protrusions extending from opposing surfaces of the component at a base end of the component. Further, the engagement portion may comprise a pair of second protrusions extending from the two opposing surfaces of the component at a predefined distance from the base end of the component. The receiving groove of the fastening device may be provided with corresponding recesses which engage with the respective first and second protrusions when the component is attached to the carrier by sliding the component into the receiving groove and by displacing the components relative to the carrier until the component has reached its desired position on the carrier.

Preferably, the fastening device is configured to fasten a plurality of components on the carrier in at least one row so as to define a row pattern. In particular, the fastening device may comprise a rail-shaped receiving groove extending across the carrier. Heating elements may extend along both sides of the at least one row in the row pattern, thus sandwiching the at least one row of components. Preferably, each row of components is sandwiched between two heating elements.

Preferred embodiments of the invention in the following are explained in greater detail with reference to the accompanying schematic drawings, in which:
- Figure 1: shows an apparatus for repairing a component by a selective laser melting or laser sintering process,
- Figure 2: shows a three dimensional view of a carrier employed in the apparatus according to Figure 1, the carrier supporting a plurality of components to be repaired,
- Figure 3: shows a first side view of the carrier according to Figure 2,
- Figure 4: shows a second side view of the carrier according to Figure 2,
- Figure 5: shows a top view of the carrier according to Figure 2,
- Figure 6: shows a sectional view of the carrier according to Figure 2 along a line A-A in Figure 5, and
- Figure 7: shows a sectional view of the carrier according to Figure 6 after a damaged segment of the components to be repaired has been removed.

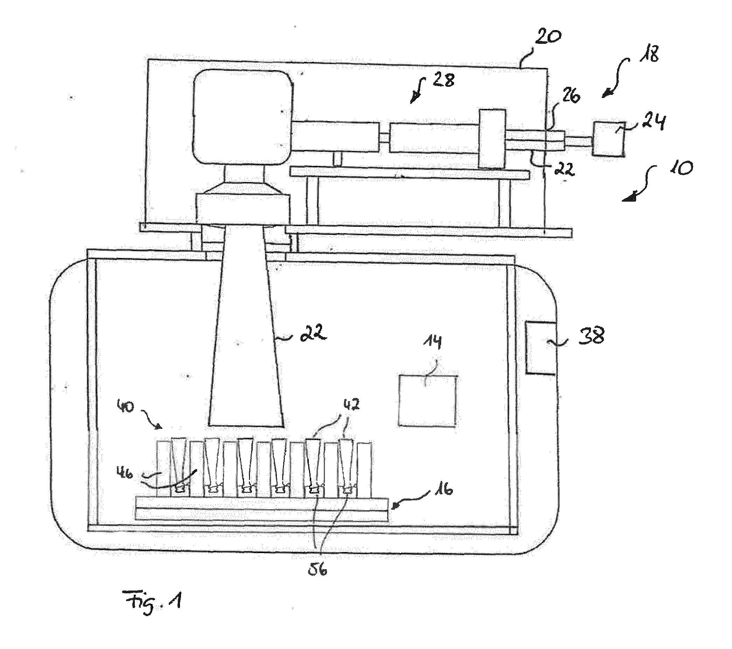

Figure 1 shows an apparatus 10 for producing three-dimensional work pieces by selective laser melting (SLM^{®}). The apparatus 10 comprises a process chamber 12. A powder application device 14, which is disposed in the process chamber 12, serves to apply a raw material powder onto a carrier 16. The process chamber 12 is sealable against the ambient atmosphere, i.e. against the environment surrounding the process chamber 12. The carrier 16 is designed to be displaceable in a vertical direction so that, with increasing construction height of a work piece, as it is built up in layers from the raw material powder on the carrier 16, the carrier 16 can be moved downwards in the vertical direction.

The apparatus 10 further comprises an irradiation device 18 for selectively irradiating laser radiation onto the raw material powder applied onto the carrier 16. By means of the irradiation device 18, the raw material powder applied onto the carrier 18 may be subjected to laser radiation in a site-selective manner in dependence on the desired geometry of the work piece that is to be produced. The irradiation device 18 has a hermetically sealable housing 20. A radiation beam 22, in particular a laser beam, provided by a radiation source 24, in particular a laser source which may, for example, comprise a diode pumped Ytterbium fibre laser emitting laser light at a wavelength of approximately 1070 to 1080 nm is directed into the housing 20 via an opening 26.

The irradiation device 18 further comprises an optical unit 28 for guiding and processing the radiation beam 22. The optical unit 28 may comprise a beam expander 30 for expanding the radiation beam 22, a scanner and an object lens. Alternatively, the optical unit 28 may comprise a beam expander including a focusing optic and a scanner unit.. By means of the scanner unit, the position of the focus of the radiation beam 22 both in the direction of the beam path and in a plane perpendicular to the beam path can be changed and adapted. The scanner unit may be designed in the form of a galvanometer scanner and the object lens may be an f-theta object lens. The operation of the irradiation device 18 is controlled by means of a control unit 38.

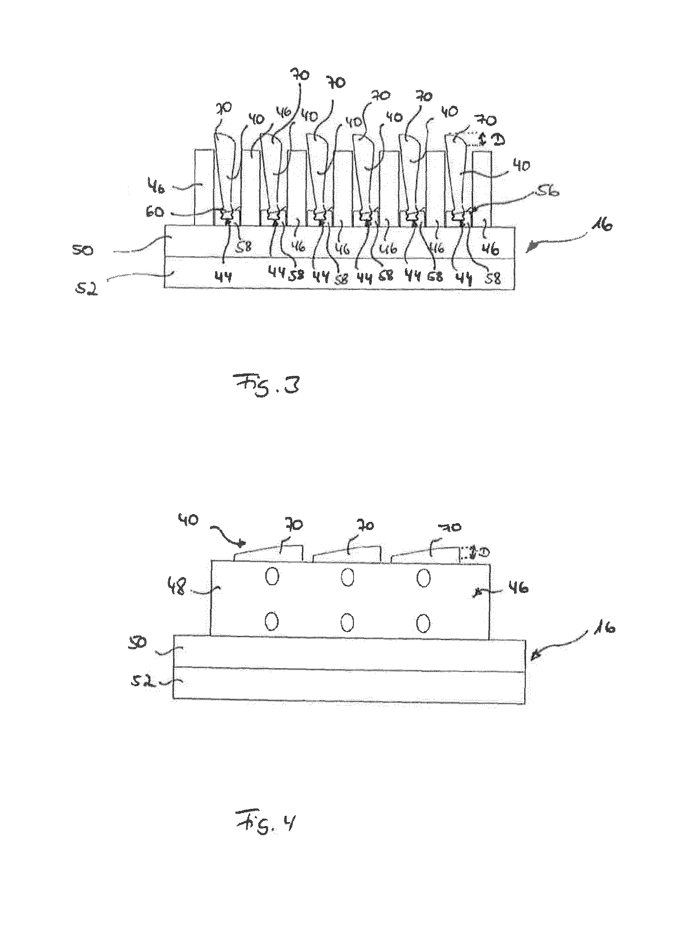

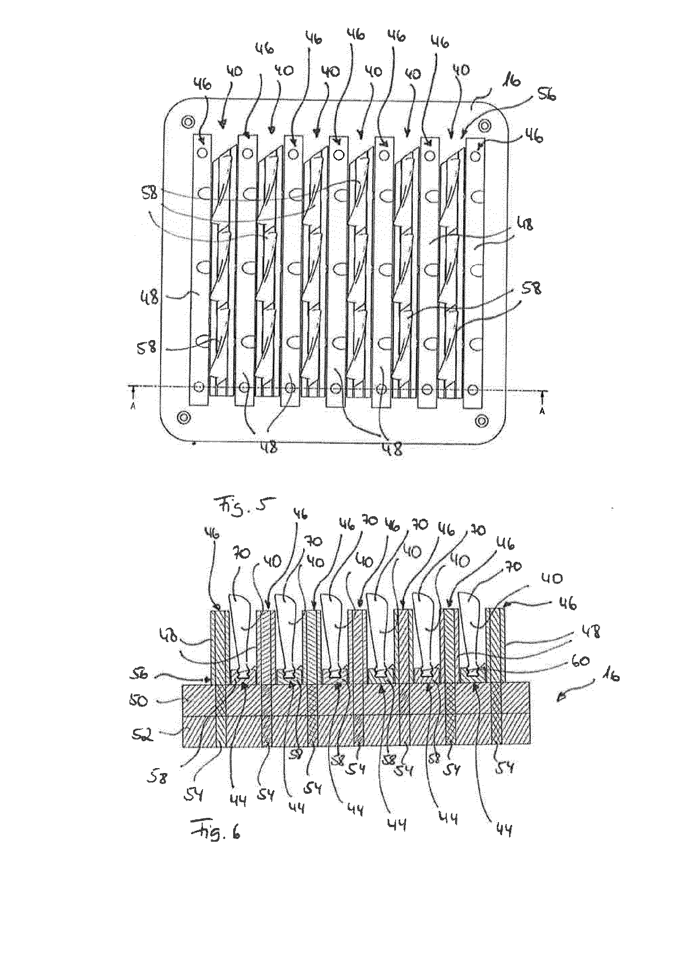

The carrier 16 of the apparatus 10 is adapted to support a component 40 to be repaired such that a repair site 42 of the component 40 faces away from the carrier 16. In particular, as becomes apparent from Figures 3 to 6, in the embodiment of an apparatus 10 shown in the drawings, the carrier 16 allows a plurality of components 40 to be positioned on the carrier 16 in a plurality of rows so as to define a row pattern. Each component 40 may, for example, be a turbine blade which, during operation in a turbomachine, is subject to wear, in particular in a tip region thereof. Each component 40 thus is positioned on the carrier 16 such that the tip region of the component 40 faces away from the carrier 16, whereas a base segment 42 of the component 40 which, during operation of the component in the turbomachine, serves to attach the component 40 to a rotor of the turbomachine, faces the carrier 16.

The components 40 positioned on the carrier 16 are heated by means of heating elements 46. In the embodiment of an apparatus 10 shown in the drawings a plurality of heating elements 46 is provided. It is, however, also conceivable that only a single heating element 46 extends from the carrier 16 adjacent to a component 40 to be repaired, in particular in case only a single component 40 should be repaired. In the embodiment of an apparatus 10 shown in the drawings, the heating elements 46 are positioned on the carrier 16 such that each row of components 40 to be repaired is sandwiched between two heating elements 46, i.e. heating elements 46 extend along both sides of each row of components 40 in the row pattern formed on the carrier 16.

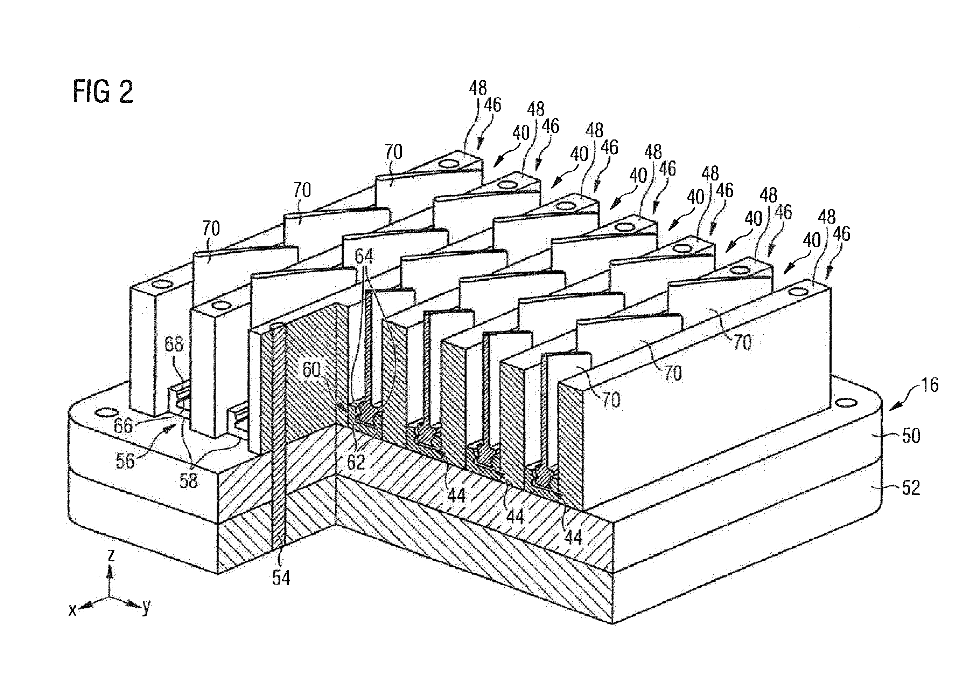

As becomes apparent, in particular from Figure 2, each heating element 46 comprises a heating plate 48 extending substantially perpendicular to a carrier surface of the carrier 16. The heating plate 48 is made of a metallic material, in particular of copper having a particularly high thermal conductivity. The carrier 16 comprises a substrate layer 50 supporting the heating elements 46 and the components 40 and a base layer 52 which is superimposed by the substrate layer 50. A heating rod 54 of each heating element 46 extends from the base layer 52 of the carrier through the substrate layer 50 of the carrier into the heating plate 48 of the heating element 46. Electric lines (not shown in the drawings) for supplying electric energy to the heating rods 54 are directed to the substrate layer 50 of the carrier 16.

The components 40 to be repaired are fastened to the carrier 16 by means of a fastening device 56. In the embodiments of an apparatus 10 shown in the drawings, the fastening device 56 is configured to fasten the plurality of components 40 to be repaired on the carrier 16 so as to define the row pattern. Of course, however, the fastening device 56 may also be used to fasten only a single component 40 to the carrier 16. The fastening device 56 comprises a plurality of rail-shaped receiving grooves 58 extending across the carrier 16 substantially parallel to each other. Each receiving groove 58 is designed so as to receive an engagement portion 60 formed on the base segment 44 of the components 40.

When the components 40, which are designed in the form of turbine blades, are mounted in a turbomachine, the engagement portions 60 of the components 40 serve to attach the components 40 to a rotor of the turbomachine. The engagement portion 60 of each component thus fulfills the double function to attach the components 40 in place during operation in a turbomachine and to also attach the components 40 to the carrier 16 during the repair process by means of the apparatus 10. In particular, the engagement portion 60 of each component 40 comprises a pair of first protrusions 62 extending from opposing surfaces of the component 40 at a base end of the component 40. Further, the engagement portion 60 comprises a pair of second protrusions 64 extending from the two opposing surfaces of the component 40 at a predefined distance from the base end of the component 40 (see in particular Figure 2). The receiving grooves 58 of the fastening device 56 are provided with corresponding recesses 66, 68 which engage with the respective first and second protrusions 62, 64 when the components 40 are attached to the carrier 16 by sliding the components 40 into the receiving grooves 58 and by displacing the components 40 relative to the carrier 16 until the components 40 have reached their desired position on the carrier 16.

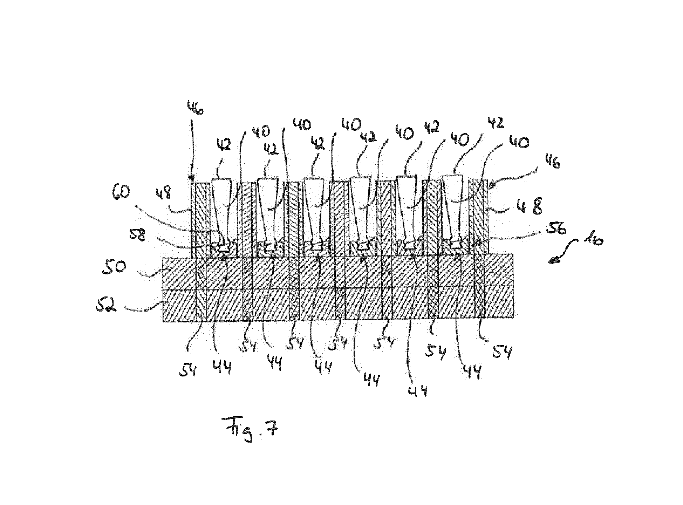

After the components 40 have been fixed to the carrier 16, a damaged segment 70 of the components 40 is removed so as to generate the repair site 42 of the components 40. In particular, the damaged segments 70 of all components 40 attached to the carrier 16 are removed simultaneously while both the components 40 and the heating elements 46 are positioned on the carrier 16. In Figures 1 and 7, the components 40 are shown after removal of the damaged segments 70. In order to ensure that the damaged segments 70 are removed from all of the components 40 in the desired manner, i.e. in a manner such that only an intact segment of the components 40 is left behind, a cutting depth D of material removed from the components 40 upon removing the damaged segments 70 is determined by the depth of the deepest damage occurring in the damaged segments 70 of the components 40.

Further, the shape and dimensions of the heating elements 46 are adapted to the cutting depth D of material removed from the components 40 upon removing the damaged segments 70 such that the heating elements 46 are prevented from interfering with a cutting tool during removing the damaged segments 70 of the components 40. Specifically, the heating elements 46 are sized and dimensioned such that a top surface of the heating elements, also after removal of the damaged segments 70, is disposed below the repair site 42 of the components 40. The components 40 may be machined so as to remove the damaged segments 70 by any suitable cutting tool, in particular a milling tool.

After removal of the damaged segments 70 from the components 40, the carrier 16 with the components 40 and the heating elements 46 being attached thereto is introduced into the process chamber 12 of the apparatus 10. By means of the powder application device 40, a raw material powder is applied onto the carrier 16 such that the components 40 and also the heating elements 46 are covered by the raw material powder. The raw material powder is selected in dependence on the material of the components 40 to be repaired. In particular, the raw material powder consists of the same material as the components 40 to be repaired.

The raw material powder applied onto the carrier, by means of the irradiation device 18, then is selectively irradiated so as to produce a repair segment on the repair site 42 of the components 40 by an additive layer construction method. In particular, operation of the irradiation device 18, by means of the control unit 38, is controlled such that a repair segment is produced on the repair site 42 of the components 40 by an additive layer construction method, the shape and dimensions of which are configured such that the original shape and dimensions of the components 40 prior to being damaged are reconstructed. For reconstructing the original shape and dimensions of the components 40 prior to being damaged, the control unit 38 uses CAD date indicative of the shape and dimensions of the components after removal of the damaged sections 70 as well as CAD date indicative of the original shape and dimensions of the components 40 prior to being damaged.

After a first layer of the repair segment is produced on the repair site 42 of the components 40, the carrier 16 is lowered in a vertical direction allowing the application of a successive powder layer by means of the powder application device 14. Thereafter, the successive powder layer is irradiated by means of the irradiation device 18. Thus, layer by layer, the repair segment is built up on the repair site 42 of the components 40 in order to reconstruct the original shape and dimensions of the components 40. The repair process is particularly efficient and suitable for repairing large numbers of components 40, since all the components 40 fastened to the carrier 16 are repaired simultaneously.

## Claims

1. Method for repairing a component (40), in particular a turbine blade, the method comprising the following steps:
- positioning the component (40) on a carrier (16) such that a repair site (42) of the component (40) faces away from the carrier (16),
- heating the component (40) by means of a heating element (46) extending from the carrier (16) adjacent to the component (40),
- applying a raw material powder onto the carrier (16) such that the component (40) is covered by the raw material powder,
- selectively irradiating electromagnetic or particle radiation onto the raw material powder applied onto the carrier (16) by means of an irradiation device (18) so as to produce a repair segment on the repair site (42) of the component (40) by an additive layer construction method.

2. Method according to claim 1,
wherein operation of the irradiation device (18) is controlled by means of a control device (38) such that a repair segment is produced on the repair site (42) of the component (40) by an additive layer construction method, the shape and dimensions of which are configured such that the original shape and dimensions of the component (40) prior to being damaged are reconstructed.

3. Method according to claim 1 or 2,
wherein a damaged segment (70) of the component (40) is removed so as to generate the repair site (42) of the component (40), in particular after the component (40) is positioned on the carrier (16).

4. Method according to claim 3,
wherein the damaged segment (70) of the component (40) is removed so as to generate the repair site (42) of the component (40) while both the component (40) and the heating element (46) are positioned on the carrier (16), the shape and dimensions of the heating element (46) in particular being adapted to a cutting depth of material removed from the component (40) upon removing the damaged segment (70) such that the heating element (46) is prevented from interfering with a cutting tool during the step of removing the damaged segment (70) of the component (40).

5. Method according to any one of claims 1 to 4,
wherein the component (40) is heated by means of a heating element (46) comprising a heating plate (48) extending substantially perpendicular to a carrier surface of the carrier (16).

6. Method according to any one of claims 1 to 5,
wherein the component (40) is fastened to the carrier (16) by means of a fastening device (56) which is designed so as to engage with a base segment (44) of the component (40), the fastening device (56) in particular comprising a receiving groove (58) which is designed so as to receive an engagement portion (60) formed on the base segment (44) of the component (40).

7. Method according to any one of claims 1 to 6,
wherein a plurality of components (40) is positioned on the carrier (16) in at least one row so as to define a row pattern, the components (40) in particular being heated by means of heating elements (46) sandwiching the at least one row of the row pattern.

8. Method according to claim 7,
wherein a step of removing damaged segments (70) of the plurality of components (40) is carried out simultaneously for the plurality of components (40) positioned on the carrier (16), wherein a cutting depth of material removed from the plurality of components (40) upon removing the damaged segments (70) is determined by the depth of the deepest damage occurring in the damaged segments (70) of the plurality of components (40).

9. Apparatus (10) for repairing a component (40), in particular a turbine blade, the apparatus (10) comprising:
- a carrier (16) adapted to support the component (40) such that a repair site (42) of the component (40) faces away from the carrier (16),
- a heating element (46) extending from the carrier (16) adjacent to the component (40) and being adapted to heat the component (40),
- a powder application device (14) adapted to apply a raw material powder onto the carrier (16) such that the component (40) is covered by the raw material powder,
- an irradiation device (18) adapted to selectively irradiate electromagnetic or particle radiation onto the raw material powder applied onto the carrier (16) so as to produce a repair segment on the repair site (42) of the component (40) by an additive layer construction method.

10. Apparatus according to claim 9,
further comprising a control device (38) adapted to control operation of the irradiation device (18) such that a repair segment is produced on the repair site (42) of the component (40) by an additive layer construction method, the shape and dimensions of which are configured such that the original shape and dimensions of the component (40) prior to being damaged are reconstructed.

11. Apparatus according to claim 9 or 10,
wherein the shape and dimensions of the heating element (46) are adapted to a cutting depth of material removed from the component (40) upon removing a damaged segment (70) of the component (40) so as to generate the repair site (42) of the component (40) such that the heating element (46) is prevented from interfering with a cutting tool during a step of removing the damaged segment (70) of the component (40).

12. Apparatus according to any one of claims 9 to 11,
wherein the heating element (46) comprises a heating plate (48) extending substantially perpendicular to a surface of the carrier (16), the heating plate (48) in particular being made of a metallic material.

13. Apparatus according to claim 12,
wherein the carrier (16) comprises a substrate layer (50) carrying the heating element (46) and a base layer (52) superimposed by the substrate layer (50), and wherein the heating element (46) comprises a heating rod (54) extending from the base layer (52) through the substrate layer (50) into the heating plate (48) of the heating element (46).

14. Apparatus according to any one of claims 9 to 13,
further comprising a fastening device (56) for fastening the component (40) to the carrier (16), the fastening device (56) being designed so as to engage with a base segment (44) of the component (40), the fastening device (56) in particular comprising a receiving groove (58) which is designed so as to receive an engagement portion (60) formed on the base segment (44) of the component (40).

15. Apparatus according to any one of claims 9 to 14,
wherein the fastening device (56) is configured to fasten a plurality of components (40) on the carrier (16) in at least one row so as to define a row pattern, the fastening device (56) in particular comprising a rail-shaped receiving groove (58) extending across the carrier (16), and wherein heating elements (46) sandwich the at least one row of the row pattern.

## Amended claims

### Amended claims in accordance with Rule 137(2) EPC.

1. Method for repairing a component (40), in particular a turbine blade, the method comprising the following steps:
- positioning the component (40) on a carrier (16) such that a repair site (42) of the component (40) faces away from the carrier (16),
- heating the component (40) by means of a heating element (46) extending from the carrier (16) adjacent to the component (40),
- applying a raw material powder onto the carrier (16) such that the component (40) is covered by the raw material powder,
- selectively irradiating electromagnetic or particle radiation onto the raw material powder applied onto the carrier (16) by means of an irradiation device (18) so as to produce a repair segment on the repair site (42) of the component (40) by an additive layer construction method, and
removing a damaged segment (70) of the component (40) so as to generate the repair site (42) of the component (40) while both the component (40) and the heating element (46) are positioned on the carrier (16), the shape and dimensions of the heating element (46) being adapted to a cutting depth of material removed from the component (40) upon removing the damaged segment (70) such that the heating element (46) is prevented from interfering with a cutting tool during the step of removing the damaged segment (70) of the component (40).

2. Method according to claim 1,
wherein operation of the irradiation device (18) is controlled by means of a control device (38) such that a repair segment is produced on the repair site (42) of the component (40) by an additive layer construction method, the shape and dimensions of which are configured such that the original shape and dimensions of the component (40) prior to being damaged are reconstructed.

3. Method according to claim 1 or 2,
wherein the component (40) is heated by means of a heating element (46) comprising a heating plate (48) extending substantially perpendicular to a carrier surface of the carrier (16).

4. Method according to any one of claims 1 to 3,
wherein the component (40) is fastened to the carrier (16) by means of a fastening device (56) which is designed so as to engage with a base segment (44) of the component (40), the fastening device (56) in particular comprising a receiving groove (58) which is designed so as to receive an engagement portion (60) formed on the base segment (44) of the component (40).

5. Method according to any one of claims 1 to 4,
wherein a plurality of components (40) is positioned on the carrier (16) in at least one row so as to define a row pattern, the components (40) in particular being heated by means of heating elements (46) sandwiching the at least one row of the row pattern.

6. Method according to claim 5,
wherein the step of removing a damaged segment (70) comprises removing damaged segments (70) of the plurality of components (40) simultaneously for the plurality of components (40) positioned on the carrier (16), wherein a cutting depth of material removed from the plurality of components (40) upon removing the damaged segments (70) is determined by the depth of the deepest damage occurring in the damaged segments (70) of the plurality of components (40).

7. Apparatus (10) for repairing a component (40), in particular a turbine blade, the apparatus (10) comprising:
- a carrier (16) adapted to support the component (40) such that a repair site (42) of the component (40) faces away from the carrier (16),
- a heating element (46) extending from the carrier (16) adjacent to the component (40) and being adapted to heat the component (40),
- a powder application device (14) adapted to apply a raw material powder onto the carrier (16) such that the component (40) is covered by the raw material powder, and
- an irradiation device (18) adapted to selectively irradiate electromagnetic or particle radiation onto the raw material powder applied onto the carrier (16) so as to produce a repair segment on the repair site (42) of the component (40) by an additive layer construction method,
wherein the shape and dimensions of the heating element (46) are adapted to a cutting depth of material removed from the component (40) upon removing a damaged segment (70) of the component (40) so as to generate the repair site (42) of the component (40) such that the heating element (46) is prevented from interfering with a cutting tool during a step of removing the damaged segment (70) of the component (40).

8. Apparatus according to claim 7,
further comprising a control device (38) adapted to control operation of the irradiation device (18) such that a repair segment is produced on the repair site (42) of the component (40) by an additive layer construction method, the shape and dimensions of which are configured such that the original shape and dimensions of the component (40) prior to being damaged are reconstructed.

9. Apparatus according to claim 7 or 8,
wherein the heating element (46) comprises a heating plate (48) extending substantially perpendicular to a surface of the carrier (16), the heating plate (48) in particular being made of a metallic material.

10. Apparatus according to claim 9,
wherein the carrier (16) comprises a substrate layer (50) carrying the heating element (46) and a base layer (52) superimposed by the substrate layer (50), and wherein the heating element (46) comprises a heating rod (54) extending from the base layer (52) through the substrate layer (50) into the heating plate (48) of the heating element (46).

11. Apparatus according to any one of claims 7 to 10,
further comprising a fastening device (56) for fastening the component (40) to the carrier (16), the fastening device (56) being designed so as to engage with a base segment (44) of the component (40), the fastening device (56) in particular comprising a receiving groove (58) which is designed so as to receive an engagement portion (60) formed on the base segment (44) of the component (40).

12. Apparatus according to any one of claims 7 to 11,
wherein the fastening device (56) is configured to fasten a plurality of components (40) on the carrier (16) in at least one row so as to define a row pattern, the fastening device (56) in particular comprising a rail-shaped receiving groove (58) extending across the carrier (16), and wherein heating elements (46) sandwich the at least one row of the row pattern.
